# EUROPÄISCHE PATENTSCHRIFT

(11) **EP 3 827 963 B1**
(45) Veröffentlichungstag und Bekanntmachung des Hinweises auf die Patenterteilung: **31.12.2025**
(21) Anmeldenummer: 19212184.6
(22) Anmeldetag: 28.11.2019
(51) Int. Cl.: B29C 48/691, B29C 48/255, B29C 48/693, F16K 3/26, F16K 5/04

(54) **VORRICHTUNG ZUM FILTRIEREN EINES FLUIDS, INSBESONDERE EINER VERUNREINIGUNGEN AUFWEISENDEN KUNSTSTOFF-SCHMELZE, SOWIE VENTILANORDNUNG FÜR EIN SOLCHES FLUID**
DEVICE FOR FILTERING A FLUID, ESPECIALLY A PLASTIC MELT WITH IMPURITIES, AND VALVE ARRANGEMENT FOR SUCH A FLUID
DISPOSITIF DE FILTRAGE D'UN FLUIDE, EN PARTICULIER D'UNE FUSION DE MATIÈRE PLASTIQUE COMPRENANT DES IMPURETÉS, AINSI QU'AGENCEMENT DE SOUPAPE POUR UN TEL FLUIDE

(43) Veröffentlichungstag der Anmeldung: 02.06.2021
(73) Patentinhaber: NORDSON CORPORATION, Westlake, OH 44145-1119 (US)
(72) Erfinder: Wöstmann, Stefan, 48336 Sassenberg (Füchtorf) (DE)
(74) Vertreter: Eisenführ Speiser

(56) Entgegenhaltungen:
- EP-A1- 3 308 939
- WO-A2-98/41305
- DE-B3- 102017 115 295
- DE-U1- 202011 106 715
- DE-U1- 29 611 292

## Beschreibung

Die Erfindung betrifft eine Vorrichtung zum Filtrieren eines Fluids, insbesondere einer Verunreinigungen aufweisenden Kunststoff-Schmelze, mit einem Gehäuse, welches mindestens einen Einlass zum Einleiten des Fluids und einen Auslass zum Abgeben des Fluids sowie einen in dem Gehäuse durch Wandabschnitte des Gehäuses ausgebildeten Hohlraum zum Aufnehmen eines Siebträgers aufweist, und einen beweglich in dem Hohlraum des Gehäuses angeordneten und eine Längsachse aufweisenden Siebträger zum Aufnehmen mindestens eines Filterelements zum Filtrieren des Fluids.

Derartige Vorrichtungen zum Filtrieren eines Fluids sind aus dem Stand der Technik bekannt. Gattungsgemäße Filtriervorrichtungen weisen wenigstens einen Siebträger auf, in dem ein oder mehrere Filterelemente angeordnet sind. Der Siebträger ist abschnittsweise in einem Gehäuse-Hohlraum aufgenommen und relativ zu diesem beweglich angeordnet. Dabei kann der Siebträger in eine Filtrierstellung gebracht werden, in welcher über den Gehäuseeinlass zugeführtes Fluid durch den Filter des Siebträgers in Richtung des Fluidauslasses geführt und filtriert wird, und in eine sogenannte Siebwechselstellung, bei welcher der Siebträger so aus dem Gehäuse-Hohlraum bewegt wird, dass das eine oder die mehreren Filterelemente zugänglich werden und ausgetauscht oder gewartet werden können. Nach dem Austausch- oder Wartungsvorgang wird der Siebträger erneut in die Filtrierstellung gebracht und der Filtriervorgang sodann fortgesetzt. Bei aus dem Stand der Technik vorbekannten Filtriervorrichtungen ist der Siebträger zumeist nahezu spielfrei in dem Hohlraum des Gehäuses angeordnet. Diese spielfreie Anordnung des Siebträgers in dem Gehäuse-Hohlraum dichtet den Siebträger gegenüber dem Gehäuse ab, womit ein Austritt von Schmelze auch bei hohen Betriebsdrücken vermieden wird.

Es hat sich jedoch bei der Verarbeitung einiger Schmelze-Materialien gezeigt, dass ein hohes Maß an Dichtigkeit zwischen Siebträger und Gehäuse-Hohlraum Nachteile mit sich bringt. So lässt sich bei der Verarbeitung von Polycarbonat-Schmelzen eine sogenanntes "Vercracken" beobachten. Im Kontaktbereich zwischen Siebträger und Gehäuse-Hohlraum bilden sich hierbei Kohleschichten aus, welche dazu führen können, dass sich der Siebträger in der Aufnahme verkeilt und nur unter großem Aufwand und mit großer Kraft entfernbar ist. Bei der Verarbeitung von zellulosebasierten Lyocell-Schmelzen hat sich darüber hinaus gezeigt, dass eine Stagnation der Schmelze im Bereich zwischen Siebträger und Gehäuse-Hohlraum in Verbindung mit dem Siebträger- bzw. Gehäusematerial - typischerweise Stahl - ein explosives Gemisch bilden kann, was ebenfalls unerwünscht ist.

Zur Überwindung einiger der beschriebenen Nachteile schlägt die EP 0 915 729 B1 vor, Abstandshalter aus Kunststoff an dem Siebträger anzuordnen, womit bereichsweise ein Fluidfluss zwischen Siebträger und umgebendem Gehäuse im Betrieb ermöglicht werden soll. Allerdings wirkt sich bei der vorgeschlagenen Lösung nachteilig aus, dass die betreffenden Abstandshalter in ungleichmäßiger Weise asymmetrisch am Umfang des Siebträgers angeordnet sind, wodurch eine exakte Führung und insbesondere eine Zentrierung des Siebträgers relativ zu dem Gehäuse-Hohlraum erschwert ist.

Auch wirkt sich bei einigen Anwendungsbereichen nachteilig aus, dass das Siebträgergrundmaterial, zumeist Stahl, einen unterschiedlichen Wärmeausdehnungskoeffizienten im Vergleich zu den vorgeschlagenen Kunststoffen aufweist. Darüber hinaus erhöht die Verwendung derartiger Abstandshalter die Fertigungskomplexität derartiger Siebträger, da an dem Siebträger Befestigungsmöglichkeiten für die Abstandshalter vorgehalten werden müssen. Je nach verwendetem Kunststoff unterliegen die Abstandshalter ferner einem erhöhten Verschließ und sind damit regelmäßig auszutauschen.

Aus DE 20 2011 106 715 U1 ist ferner eine Vorrichtung zum Verteilen einer Kunststoffschmelze bekannt. Die Vorrichtung weist einen Gehäusegrundkörper auf, welcher zumindest einen Eintrittskanal und zumindest einen Austrittskanal für die Kunststoffschmelze aufweist, wobei zwischen dem zumindest einen Eintrittskanal und dem zumindest einen Austrittskanal zumindest eine Aufnahmeöffnung verläuft zur Aufnahme zumindest eines darin bewegbaren Verteilerkörpers. Aus EP 3 308 939 A1 ist ein Strömungsumlenkungsventil für ein Extrusionssystem bekannt.

Vor diesem Hintergrund lag der Erfindung die Aufgabe zugrunde, eine Filtriervorrichtung der eingangs bezeichneten Art dahingehend weiterzubilden, dass die im Stand der Technik aufgefundenen Nachteile möglichst weitgehend behoben werden. Insbesondere soll eine Filtriervorrichtung angegeben werden, die einen Austausch des Fluides zwischen dem Siebträger und dem Gehäuse-Hohlraum ermöglicht, eine exaktere Führung des Siebträgers relativ zu dem Gehäuse-Hohlraum sicherstellt sowie verschleißbeständiger ist.

Erfindungsgemäß wird die Aufgabe bei der Filtriervorrichtung dadurch gelöst, dass der Siebträger außen mehrere integral ausgebildete Erhebungen aufweist, wobei die Erhebungen einstückig mit dem Siebträger und aus demselben Werkstoff ausgebildet sind und/oder einen nicht rotationssymmetrischen Querschnitt aufweist und/oder an den Hohlraum begrenzenden Wandabschnitten des Gehäuses Erhebungen und/oder Ausnehmungen ausgebildet sind, derart, dass zwischen dem Wandabschnitt und dem Siebträger mehrere Spalte/Hohlräume ausgebildet sind, mittels derer ein geringer Fluidfluss im Betrieb ermöglicht ist.

Der Erfindung liegt damit die Erkenntnis zugrunde, Erhebungen und/oder Ausnehmungen an dem Siebträger und/oder an den hohlraumbegrenzenden Wandabschnitten des Gehäuses auszubilden, wobei die Erhebungen und/oder Ausnehmungen einstückig mit dem jeweiligen Körper - Siebträger und/oder Gehäuse - und mithin integral und aus demselben Werkstoff ausgebildet sind. Die Erhebungen und/oder Ausnehmungen führen dazu, dass zwischen dem Wandabschnitt und dem Siebträger mehrere Spalte/Hohlräume ausgebildet sind, sodass Fluid im Betrieb in diesen Spalten/Hohlräumen fließen kann, ein Fluidaustritt aus der Vorrichtung gleichsam jedoch minimal ist. Die Ausbildung von Kohleschichten bei der Verarbeitung von Polycarbonat-Schmelzen oder die Entstehung explosiver Gemische bei der Verarbeitung von Lyocell-Schmelzen kann hierdurch verhindert werden.

Dabei geht mit der integralen Ausbildung der Erhebungen und/oder Ausnehmungen eine reduzierte Fertigungskomplexität im Vergleich zu mehrstückigen und mehrere Materialien aufweisenden Lösungen einher. Sowohl Siebträger als auch Gehäuse können aus jeweils einem einzigen Werkstück gefertigt und mittels Standard-Bearbeitungsmethoden kostengünstig bearbeitet werden. Ferner hat die einstückige bzw. integrale Ausbildung der Erhebungen und/oder Ausnehmungen den Vorteil, dass sämtliche Abschnitte des Gehäuses und des Siebträgers einer konstanten Wärmeausdehnung unterliegen, sodass die auftretenden Spaltmaße auch bei Erwärmung oder Abkühlung der Vorrichtung weitestgehend konstant bleiben. Auch unterliegen die Erhebungen im Vergleich zu einer Ausbildung derselben aus Kunststoff einem geringeren Verschleiß. Insoweit wird auch das Auftreten verschleißabhängig variabler Spaltmaße vermieden.

Gemäß eines zweiten Aspektes der Erfindung bzw. gemäß einer vorteilhaften Weiterbildung der Erfindung gemäß des ersten Aspektes wird erfindungsgemäß vorgeschlagen, dass der Siebträger außen mindestens drei, vorzugsweise vier Erhebungen aufweist und/oder an den Hohlraum begrenzenden Wandabschnitten des Gehäuses Erhebungen und/oder Ausnehmungen ausgebildet sind, die so entlang des Umfangs des Siebträgers verteilt angeordnet sind, dass der Siebträger im Wesentlichen zentriert innerhalb des Hohlraumes des Gehäuses angeordnet ist, derart, dass zwischen dem Wandabschnitt und dem Siebträger mehrere Spalte/Hohlräume ausgebildet sind, mittels derer ein geringer Fluidfluss im Betrieb ermöglicht ist.

Durch die Anordnung der wenigstens drei Erhebungen entlang des Siebträger-Umfangs wird sichergestellt, dass der Siebbolzen zentriert innerhalb des Hohlraumes des Gehäuses aufgenommen und gleichzeitig ein geringer Fluidfluss zwischen dem Gehäuse und dem Siebträger im Betrieb ermöglicht ist.

Gemäß einer bevorzugten Weiterbildung erstrecken sich die Erhebungen im Wesentlichen in Richtung einer Längsachse des Siebträgers und geradlinig, vorzugsweise über im Wesentlichen die gesamte Länge des Siebträgers. Derartige Erhebungsgeometrien sind nicht nur exakt und mittels Standardfertigungsverfahren fertigbar, sondern ermöglichen gleichzeitig eine sichere, zentrierte und verkantungsfreie Führung des Siebträgers in dem Gehäuse-Hohlraum.

Weiterhin ist bevorzugt, dass die Erhebungen gleichmäßig beanstandet in Richtung des Umfangs des Siebträgers angeordnet sind. Eine gleichmäßige Beabstandung der Erhebungen in Richtung des Umfangs des Siebträgers bewirkt eine exakte Zentrierung des Siebträgers innerhalb des Gehäuse-Hohlraumes, wobei gleichzeitig ein großer Umfangsbereich des Siebträgers dem gewünschten geringen Fluidfluss zwischen dem Gehäuse und dem Siebträger im Betrieb zugänglich ist.

Gemäß einer bevorzugten Weiterbildung weisen die Erhebungen gegenüber dem sonstigen Durchmesser des Siebträgers eine Höhe im Bereich von etwa 0,05 - 3 mm, vorzugsweise im Bereich von etwa 0,1 - 0,2 mm, auf. Der angegebene Höhenbereich hat sich als besonders geeignet zur Erzielung einer hinreichenden Dichtwirkung zwischen Gehäuse und Siebträger einerseits und zur Ermöglichung des gewünschten geringen Fluidfluss zwischen den Bauteilen andererseits herausgestellt.

Ferner sind die Erhebungen gemäß einer bevorzugten Ausführungsform aus einem verschleißarmen Material, insbesondere Metall oder Kunststoff ausgebildet. Die Verwendung von Metall weist den Vorteil einer gleichen bzw. weitestgehend ähnlichen Wärmeausdehnung der Erhebungen relativ zu dem Gehäuse und dem Siebträger auf, sodass die auftretenden Spaltmaße weitestgehend konstant bleiben. Die Verwendung von Kunststoffen hat sich darüber hinaus für einige Anwendungsbereiche bzw. Schmelze-Materialien aufgrund einer hohen chemischen Beständigkeit einiger Kunststoffe sowie deren Gleiteigenschaften als vorzugswürdig erwiesen.

Die Erfindung wird dadurch weitergebildet, dass der Siebträger senkrecht zur Siebträger-Längsachse und/oder der den Hohlraum begrenzende Wandabschnitt des Gehäuses einen gleichdickförmigen Querschnitt aufweist, welcher die Erhebungen des Siebträgers und/oder die Erhebungen und/oder Ausnehmungen der Wandabschnitte ausbildet.

Als gleichdickförmiger Querschnitt wird ein solcher bezeichnet, bei dem zwei gegenüberliegende parallele Stützgeraden, die den Querschnitt berühren, immer den gleichen Abstand zueinander haben. Die Stützgeraden sind so zu wählen, dass sie jeweils mindestens einen Punkt gemeinsam mit der Grenze des Querschnitts haben aber keinen gemeinsamen Punkt mit einem Inneren des Querschnitts. Das Vorsehen eines gleichdickförmigen Querschnitts hat sich dabei als besonders vorteilhaft erwiesen, um sowohl eine exakte Zentrierung des Siebbolzens relativ zu dem Gehäuse-Hohlraum zu erzielen als auch einen entsprechend dimensionierten Spalt oder Hohlraum bereitzustellen, um einen geringen Fluidfluss zwischen dem Wandabschnitt und dem Siebträger zu ermöglichen.

Vorzugsweise ist der den Hohlraum begrenzende Wandabschnitt des Gehäuses zylindrisch ausgebildet, wobei der Siebträger senkrecht zur Siebträger-Längsachse einen gleichdickförmigen Querschnitt aufweist. Ein entsprechender Siebträger realisiert die oben genannten Vorteile und ist kompatibel zu bestehenden Gehäusesystemen.

Gemäß einer alternativen Ausführungsform ist der Siebträger zylindrisch ausgebildet, wobei der den Hohlraum begrenzende Wandabschnitt des Gehäuses einen gleichdickförmigen Querschnitt aufweist.

Weiterhin ist bevorzugt, dass der gleichdickförmige Querschnitt als dreikantiger oder vierkantiger Gleichdickquerschnitt ausgebildet ist. Je nach zu verarbeitendem Schmelze-Material und dem gewünschten Fluidflussgrad zwischen dem Wandabschnitt und dem Siebträger kann der gleichdickförmige Querschnitt geeignet als dreikantiger oder vierkantiger Gleichdickquerschnitt ausgewählt werden.

Die Erfindung wird dadurch weitergebildet, dass der gleichdickförmige Querschnitt als Reuleaux-Dreieck ausgebildet ist. Ein solches Dreieck basiert auf einem gleichseitigen Dreieck, bei dem anstelle der Schenkel des Dreiecks Kreissegmente vorgesehen sind. Der Radius dieser Kreissegmente entspricht der Seitenlänge des zugrundeliegenden gleichseitigen Dreiecks. Die Ausbildung des gleichdickförmigen Querschnitts als Reuleaux-Dreieck bringt zum einen den Vorteil einer einfachen Fertigbarkeit mit sich und ermöglicht zum anderen eine exakte Zentrierung des Siebträgers relativ zu dem Wandabschnitt des Gehäuses. Die Querschnittsfläche ist im Vergleich zu anderen Gleichdickausprägungen minimal, woraus ein vergrößertes Volumen der Spalte bzw. Hohlräume resultiert.

Gemäß einer alternativen Ausführungsform weist der Siebträger senkrecht zur Siebträger-Längsachse und/oder der den Hohlraum begrenzende Wandabschnitt des Gehäuses einen polygonalen Querschnitt auf, insbesondere aufweisend 3, 4, 5 oder mehr Ecken, wobei die Ecken vorzugsweise abgerundet ausgebildet sind. Gemäß einer alternativ bevorzugten Ausführungsform weist der Siebträger senkrecht zur Siebträger-Längsachse und/oder der den Hohlraum begrenzende Wandabschnitt einen ellipsenförmigen Querschnitt auf.

Die Ausgestaltung des Siebträger-Querschnitts oder Wandabschnitt-Querschnitts als Polygon bzw. Ellipse hat sich als alternative vorteilhafte Ausgestaltung erwiesen, um eine hinreichende und gut beeinflussbare Fluidströmung zwischen dem Wandabschnitt und dem Siebträger sicherzustellen, Siebträger und Gehäuse relativ zueinander zu zentrieren, und weiterhin eine kostengünstige Fertigbarkeit zu realisieren.

Die Erfindung wird dadurch weitergebildet, dass der Siebträger in dem Hohlraum radial und/oder axial beweglich angeordnet ist. Hierbei hat sich gezeigt, dass neben der rein axialen Bewegbarkeit des Siebträgers eine radiale Bewegungskomponente desselben dazu beitragen kann, die Bildung von Kohleschichten bei der Verarbeitung von Polycarbonat-Schmelzen sowie die Bildung explosiver Gemische bei der Verwendung von Lyocell-Schmelzen durch eine radiale oder kombinierte radial-axiale Bewegung des Siebträgers zu reduzieren.

Die Erfindung ist vorstehend unter Bezugnahme auf eine Filtriervorrichtung beschrieben worden. In einem weiteren Aspekt betrifft die Erfindung eine Ventilanordnung, insbesondere für eine Verunreinigungen aufweisende Kunststoffschmelze, mit einem Gehäuse, welches mindestens einen Einlass zum Einleiten des Fluids und mindestens eine Auslass zum Abgeben des Fluids sowie einen in dem Gehäuse durch Wandabschnitte des Gehäuses ausgebildeten Hohlraum zum Aufnehmen eines Ventilbolzens aufweist und einen beweglich in dem Hohlraum des Gehäuses angeordneten Ventilbolzen zum selektiven Freigeben, Verteilen und/oder Sperren des Fluidflusses durch das Gehäuse wobei der Ventilbolzen außen mehrere integral ausgebildete Erhebungen und/oder einen nicht rotationssymmetrischen Querschnitt aufweist und/oder an den Hohlraum begrenzenden Wandabschnitten des Gehäuses Erhebungen und/oder Ausnehmungen ausgebildet sind, derart, dass zwischen dem Wandabschnitt und dem Ventilbolzen mehrere Spalte/Hohlräume ausgebildet sind, mittels derer ein geringer Fluidfluss im Betrieb ermöglicht ist.

Auch bei aus dem Stand der Technik vorbekannten Ventilanordnungen ergeben sich die in Bezug auf die Filtriervorrichtung beschriebenen Nachteile, insbesondere bei der Verarbeitung von Polycarbonat-Schmelzen betreffend die Ablagerung von Kohleschichten zwischen Ventilgehäuse und Ventilbolzen sowie die Gefahr der Bildung von explosiven Gemischen bei der Verarbeitung von Lyocell-Schmelzen.

Insoweit löst die Erfindung die eingangs bezeichnete Aufgabe in Bezug auf die Ventilanordnung, indem der Ventilbolzen senkrecht zur Ventilbolzen-Längsachse und/oder der Hohlraum begrenzende Wandabschnitt des Gehäuses einen gleichdickförmigen Querschnitt aufweist, welcher die Erhebungen des Ventilbolzens und/oder die Erhebungen und/oder Ausnehmungen der Wandabschnitte ausbildet.

Die Ventilanordnung macht sich die gleichen Vorteile zunutze wie die erfindungsgemäße Filtriervorrichtung. Insbesondere verhindert oder vermindert die Ventilanordnung bei Verwendung mit Polycarbonat-Schmelzen durch Ermöglichung eines geringen Fluidflusses zwischen dem Wandabschnitt und dem Ventilbolzen die Ablagerung von Kohleschichten zwischen Ventilbolzen und Ventilgehäuse, wodurch eine Schwergängigkeit oder eine Blockierung des Ventilbolzens vermieden wird und im Falle von Lyocell-Anwendungen die Bildung explosiver Gemische.

Die integrale Ausbildung der Erhebungen und/oder Ausnehmungen vereinfacht weiterhin die Fertigung, führt zu vorhersagbaren und auch bei Wärmeausdehnung weitestgehend konstanten Spaltmaßen und ermöglicht eine hohe Zentrierung der Komponenten relativ zueinander.

Gemäß eines weiteren Aspektes der Erfindung bzw. gemäß einer vorteilhaften Weiterbildung der erfindungsgemäßen Ventilanordnung wird vorgeschlagen, dass der Ventilbolzen außen mindestens drei, vorzugsweise vier Erhebungen aufweist und/oder an den Hohlraum begrenzenden Wandabschnitten des Gehäuses Erhebungen und/oder Ausnehmungen ausgebildet sind, die so entlang des Umfangs des Ventilbolzens verteilt angeordnet sind, dass der Ventilbolzen im Wesentlichen zentriert innerhalb des Hohlraumes des Gehäuses angeordnet ist, derart, dass zwischen dem Wandabschnitt und dem Ventilbolzen mehrere Spalte/Hohlräume ausgebildet sind, mittels derer ein geringer Fluidfluss im Betrieb ermöglicht ist.

Die Erfindung wird dadurch weitergebildet, dass sich die Erhebungen im Wesentlichen in Richtung der Längsachse des Ventilbolzens und geradlinig erstrecken, bevorzugt im Wesentlichen über die gesamte Länge des Ventilbolzens. Gemäß einer bevorzugten Ausführungsform sind die Erhebungen gleichmäßig beanstandet in Richtung des Umfangs des Ventilbolzens angeordnet. Ferner ist bevorzugt, dass die Erhebungen gegenüber dem sonstigen Durchmesser des Ventilbolzens eine Höhe im Bereich von etwa 0,05 - 3 mm, vorzugsweise im Bereich von etwa 0,1 - 0,2 mm, aufweisen.

Gemäß einer bevorzugten Ausführungsform sind die Erhebungen aus einem verschleißarmen Material, insbesondere Metall oder Kunststoff, ausgebildet. Die Erfindung wird dadurch weitergebildet, dass der Ventilbolzen senkrecht zur Ventilbolzen-Längsachse und/oder der Hohlraum begrenzende Wandabschnitt des Gehäuses einen gleichdickförmigen Querschnitt aufweist, welcher die Erhebungen des Ventilbolzens und/oder die Erhebungen und/oder Ausnehmungen der Wandabschnitte ausbildet. Vorzugsweise ist der gleichdickförmige Querschnitt als dreikantiger oder vierkantiger gleichdicke Querschnitt ausgebildet.

Hinsichtlich der Vorteile einer demgemäßen Ausbildung des Ventilbolzens und/oder des den Hohlraum begrenzende Wandabschnittes des Gehäuses sei auf obige Ausführungen betreffend die Filtriervorrichtung verwiesen, welche hier in analoger Weise Gültigkeit besitzen.

Gemäß einer bevorzugten Ausführungsform ist der gleichdickförmige Querschnitt als Reuleaux-Dreieck ausgebildet. Ein solcher Querschnitt ist mit wenig Aufwand fertigbar, ermöglicht zwischen dem Wandabschnitt und dem Ventilbolzen einen Fluidfluss im Betrieb und gleichzeitig eine Zentrierung des Ventilbolzens relativ zu dem Gehäuse.

Gemäß einer alternativen Ausführungsform weist der Ventilbolzen senkrecht zur Ventilbolzen-Längsachse und/oder der den Hohlraum begrenzende Wandabschnitt des Gehäuses einen polygonalen Querschnitt auf, insbesondere aufweisend 3, 4, 5 oder mehr Ecken. Vorzugsweise sind die Ecken abgerundet ausgebildet.

Gemäß einer weiteren alternativen Ausführungsform weist der Ventilbolzen senkrecht zur Ventilbolzen-Längsachse und/oder der den Hohlraum begrenzende Wandabschnitt einen ellipsenförmigen Querschnitt auf.

Hinsichtlich der Vorteile der ebengenannten Ausführungsformen sei auf obige Ausführungen betreffend die Filtriervorrichtung verwiesen.

Die Erfindung wird dadurch weitergebildet, dass die Ventilanordnung als eines der folgenden ausgebildet ist: Absperrventil, Verteilerventil. Die beschriebenen Ventiltypen werden häufig bei Kunststoff-Schmelze verarbeitenden Vorrichtungen verwendet.

Die Erfindung wird nachfolgend anhand bevorzugter Ausführungsbeispiele unter Bezugnahme auf die beigefügten Figuren näher beschrieben.

Hierbei zeigen:
- Fig. 1: ein erstes Ausführungsbeispiel einer erfindungsgemäßen Filtriervorrichtung in einer perspektivischen Ansicht;
- Fig. 2: das Ausführungsbeispiel der erfindungsgemäßen Filtriervorrichtung gemäß Fig. 1 in einer Seitenansicht;
- Fig. 3: das Ausführungsbeispiel der erfindungsgemäßen Filtriervorrichtung gemäß den Figuren 1 und 2 in einer Schnittansicht;
- Fig. 4, 5: weitere Ansichten der erfindungsgemäßen Filtriervorrichtung gemäß den Figuren 1-3;
- Fig. 6, 7: einen erfindungsgemäßen Siebträger in einer perspektivischen Ansicht sowie einer Seitenansicht;
- Fig. 8a: eine Querschnittsansicht des erfindungsgemäßen Siebträgers;
- Fig. 8b: ein alternatives Ausführungsbeispiel eines erfindungsgemäßen Siebträgers in einer Schnittansicht;
- Fig. 9-13: ein Ausführungsbeispiel eines erfindungsgemäßen Absperrventils in verschiedenen Ansichten und Betriebszuständen; und

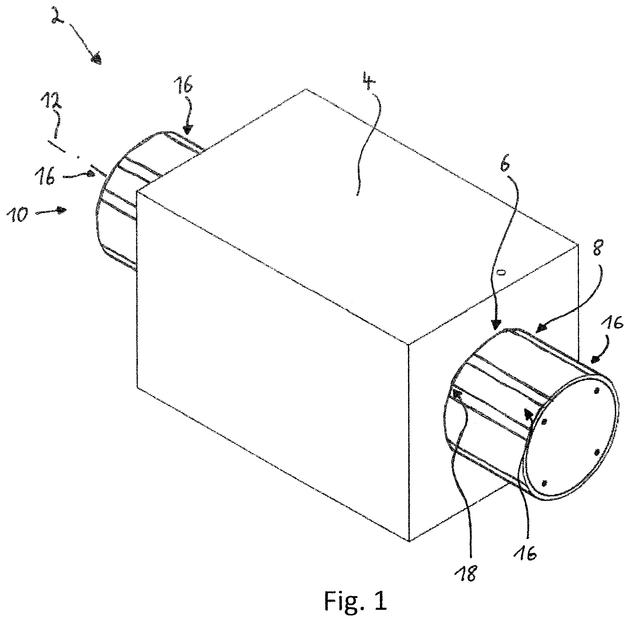

Fig. 1 zeigt eine Filtriervorrichtung 2, welche ein Gehäuse 4 mit einem Aufnahme-Hohlraum 8 aufweist, in welchem ein Siebträger 10 aufgenommen ist. Der Siebträger 10 ist gegenüber dem Hohlraum 8 in Richtung einer Siebträger-Längsachse 12 beweglich angeordnet. Das Gehäuse 4 weist in an sich bekannter Weise einen Einlass zum Einleiten eines zu filternden Fluids sowie einen Auslass zum Abgeben des gefilterten Fluids auf (nicht dargestellt).

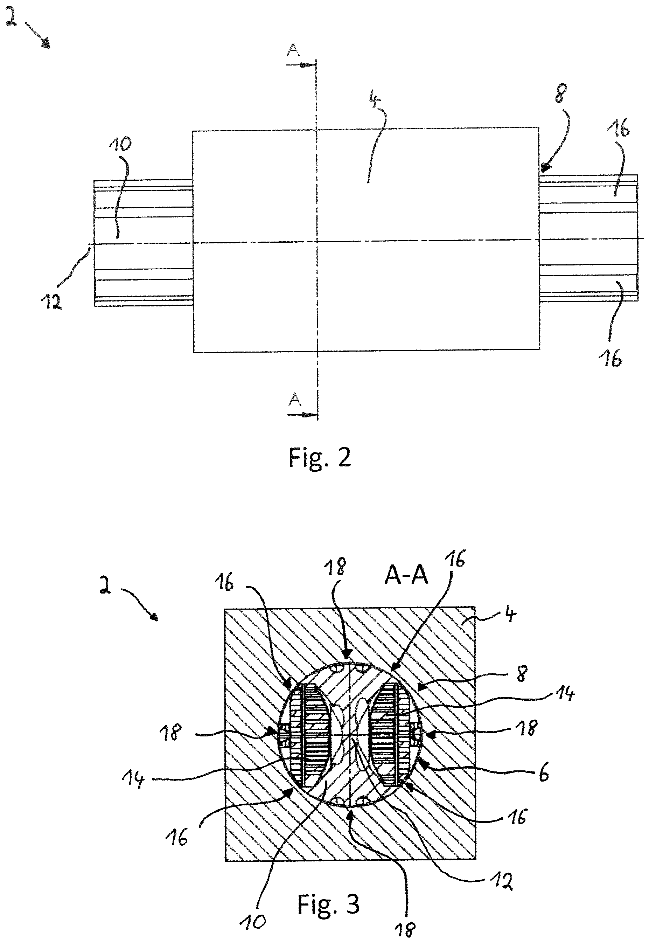

Der Siebträger 10 weist an seiner Außenseite mehrere integral ausgebildete Siebträger-Erhebungen 16 auf. Der Aufnahme-Hohlraum 8 des Gehäuses 4 ist zylindrisch ausgebildet. Dies hat zur Folge, dass sich zwischen dem Aufnahme-Hohlraum 8 und dem Siebträger 10 im Bereich von Gehäuse-Wandabschnitten 6 Spalte, bzw. Hohlräume 18 ausbilden, mittels derer ein geringer Fluidfluss im Betrieb möglich ist. Fig. 2 zeigt die Filtriervorrichtung 2 in einer Seitenansicht.

Fig. 3 zeigt den konstruktiven Aufbau des Siebträgers 10 anhand einer Schnittdarstellung, geschnitten entlang der Ebene A-A aus Fig. 2. Der Siebträger 10 weist Filterelemente 14 auf, mittels welcher das Fluid gefiltert wird. Der Siebträger 10 weist vorliegend insgesamt vier um den Umfang des Siebträgers 10 gleichmäßig beabstandet angeordnete Siebträger-Erhebungen 16 auf. Die Anordnung der Siebträger-Erhebungen 16 bewirkt neben einer Zentrierung des Siebträgers 10 in dem Aufnahme-Hohlraum 8, dass sich zwischen dem Wandabschnitt 6 und dem Siebträger 10 mehrere Spalte bzw. Hohlräume 18 ausbilden, wobei innerhalb dieser Spalte bzw. Hohlräume 18 im Betrieb ein Fluidfluss ermöglicht ist.

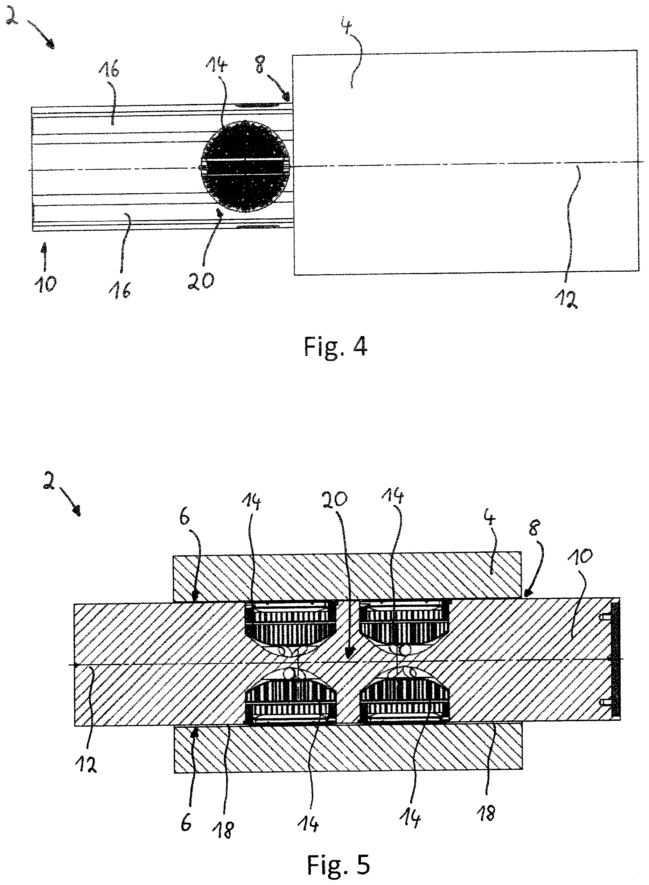

In Fig. 4 ist die Filtriervorrichtung 2 in einer sogenannten Siebwechselstellung dargestellt. Der Siebträger 10 ist so weit aus dem Gehäuse 4 herausbewegt, dass eines der Filterelemente 14 von außerhalb des Gehäuses 4 zugänglich ist und ausgetauscht bzw. einer Wartung unterzogen werden kann. In Fig. 5 befindet sich die Filtriervorrichtung 2 in einer Betriebsstellung, in welcher Fluid mittels der Filterelemente 14 filtrierbar ist. Die Filterelemente 14 sind in der Filtrierstellung von außerhalb der Filtriervorrichtung 2 nicht zugänglich.

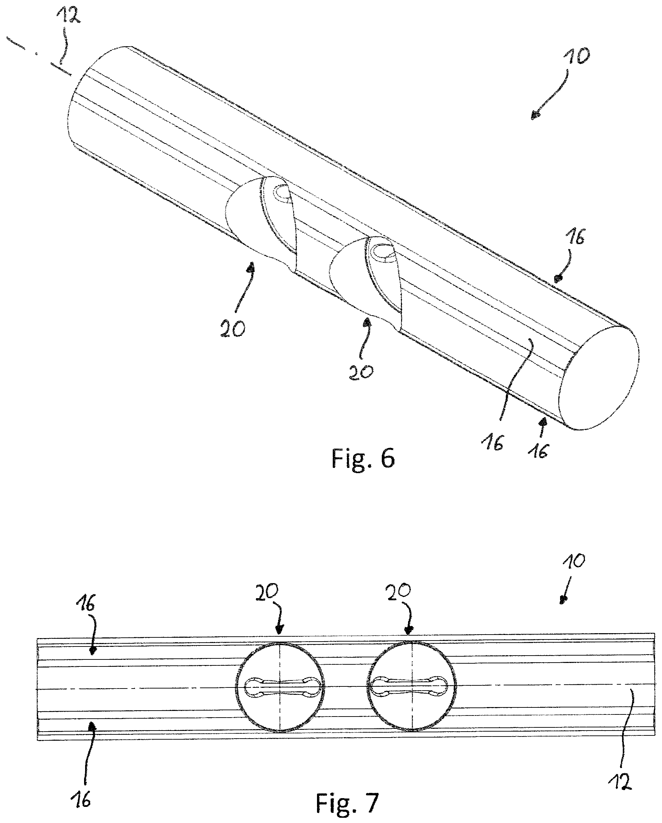

Die Figuren 6 sowie 7 zeigen einen Siebträger 10 ohne in die Filterelementaufnahmen 20 eingesetzte Filterelemente 14. Die Siebträger-Erhebungen 16 sind vorliegend gleichmäßig um den Umfang des Siebträgers 10 beabstandet angeordnet und erstrecken sich in Richtung der Längsachse 12 des Siebträgers 10 sowie gradlinig.

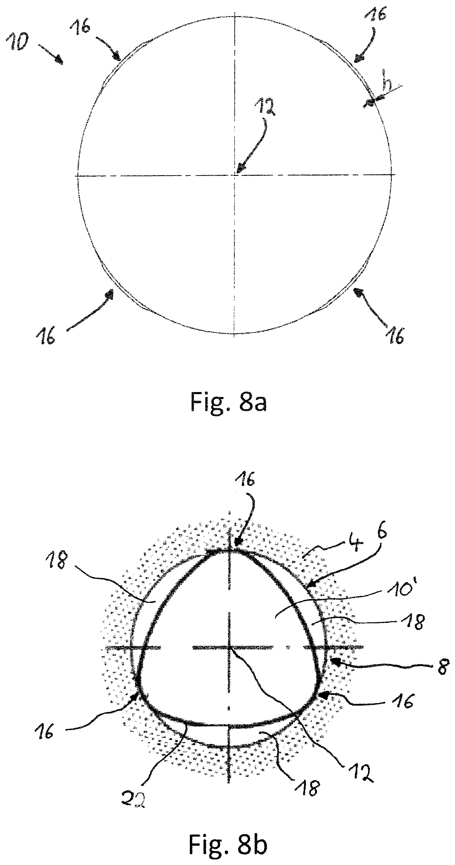

Der Querschnitt des Siebträgers 10 ist in Fig. 8a gezeigt. Erneut ist die entlang des Umfangs gleichmäßig beabstandete Anordnung der Siebträger-Erhebungen 16 veranschaulicht. Vorliegend weist der Siebträger 10 vier Siebträger-Erhebungen auf, wobei die Erfindung nicht auf diese Anordnung beschränkt ist. Vielmehr ist ebenfalls möglich, drei Siebträger-Erhebungen 16 an dem Siebträger 10 anzuordnen oder auch eine größere Zahl an Siebträger-Erhebungen 16. Die Erhebungen 16 erstrecken sich in Richtung der Längsachse 12 des Siebträgers 10 sowie insbesondere gradlinig. Die Erhebungen 16 weisen gegenüber dem sonstigen Durchmesser des Siebträgers 10 eine Höhe h im Bereich von etwa 0,05 - 3 mm, vorzugsweise im Bereich von etwa 0,1 - 0,2 mm, auf. Die Erhebungen 16 sind vorliegend aus Metall ausgebildet, können jedoch auch aus einem anderen, verzugsweise verschleißarmen Material, wie insbesondere Kunststoff, ausgebildet sein.

Fig. 8b zeigt ein alternatives Ausführungsbeispiel eines Siebträgers 10'. Der Siebträger 10', der in einem zylindrischen Aufnahme-Hohlraum 8 angeordnet ist, weist einen gleichdickförmigen Querschnitt 22 auf. Der gleichdickförmige Querschnitt 22 ist vorliegend als dreikantiger gleichdickförmiger Querschnitt 22 ausgebildet. Im Vergleich zu dem in Fig. 8a gezeigten Ausführungsbeispiel eines Siebträgers 10 bestehen bei dem in der Fig. 8b gezeigten Siebträger 10' größere Spalte bzw. Hohlräume 18 zwischen dem GehäuseWandabschnitt 6 sowie dem Siebträger 10'. Grundsätzlich ermöglicht damit die Ausgestaltung des Siebträgers 10' mit dem gleichdickförmigen Querschnitt 22 einen höheren Fluidfluss zwischen Aufnahme-Hohlraum 8 und Siebträger 10', wobei der Siebträger 10' gleichzeitig exakt im Aufnahme-Hohlraum 8 zentriert ist.

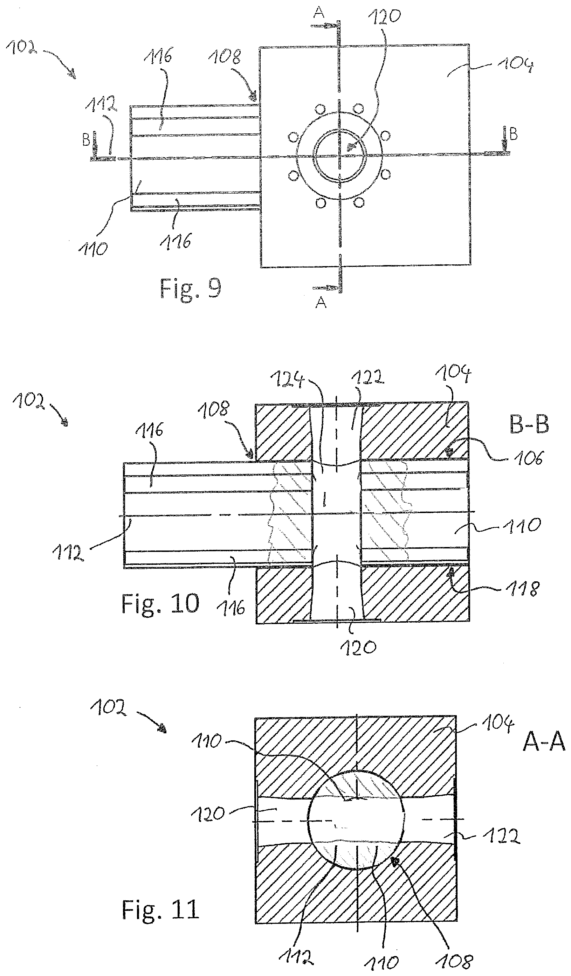

Die Figuren 9 bis 13 zeigen ein Ausführungsbeispiel eines Absperrventils 102 mit einem Gehäuse 104, welches Wandabschnitte 106 aufweist und einen Aufnahme-Hohlraum 108 ausbildet. Dem Absperrventil 102 liegt dieselbe erfinderische Idee zugrunde wie der Filtriervorrichtung 2. Das Gehäuse 104 weist einen ersten Ein-/Auslass 120 sowie einen zweiten Ein-/Auslass 122 auf. In dem Aufnahme-Hohlraum 108 ist ein Ventilbolzen 110 angeordnet, der entlang einer Ventilbolzen-Längsachse 112 axial relativ zu dem Gehäuse 104 beweglich angeordnet ist.

Der Ventilbolzen 110 weist einen durchgehenden Fließkanal in Form einer vorzugsweisen zylindrischen Bohrung 124 auf, welcher, wenn er sich aufgrund einer betreffenden Positionierung des Ventilbolzens 110 relativ zu dem Gehäuse 104 in fluidleitender Verbindung mit dem ersten Ein-/Auslass 120 sowie dem zweiten Ein-/Auslass 122 befindet, einen Kanal von dem ersten Ein-/Auslass 120 zum zweiten Ein-/Auslass 122 freigibt und einen Fluidfluss von dem ersten Ein-/Auslass 120 zu dem zweiten Ein-/Auslass 122 sperrt, wenn sich der Fließkanal in nicht fluidleitender Verbindung mit dem ersten Ein-/Auslass 120 sowie dem zweiten Ein-/Auslass 122 befindet.

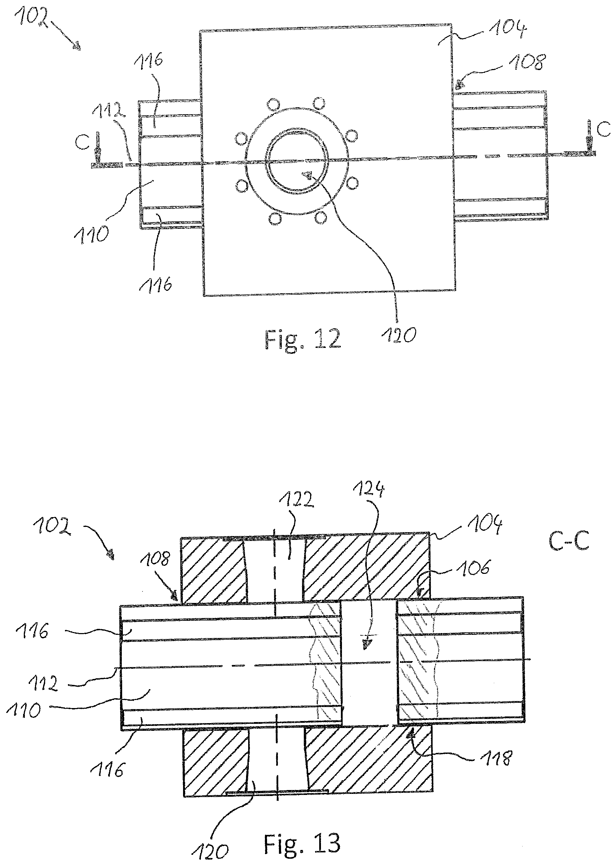

In dem in den Figuren 9 bis 11 gezeigten Betriebszustand befindet sich das Absperrventil 102 somit in einer Durchlassstellung, bei welcher ein Fluidfluss von dem ersten Ein-/Auslass 120 zum zweiten Ein-/Auslass 122 freigegeben ist. Wird der Ventilbolzen 110 in die in den Figuren 12 sowie 13 gezeigte Position verbracht, so sperrt der Ventilbolzen 110 einen Fluidfluss von dem ersten Ein-/Auslass 120 zu dem zweiten Ein-/Auslass 122. Das Absperrventil 102 befindet sich bei dem in den Figuren 12 sowie 13 gezeigten Zustand in einer Sperrstellung.

Der Ventilbolzen 110 weist an seiner Außenseite mehrere integral ausgebildete Ventilbolzen-Erhebungen 116 auf. Der Aufnahme-Hohlraum 108 des Gehäuses 104, bzw. die entsprechenden Gehäuse-Wandabschnitte 106, bilden einen zylindrischen Hohlraum aus. Dies hat, wie auch in analoger Weise bei der Filtriervorrichtung 2, zur Folge, dass sich in den Bereichen zwischen den Ventilbolzen-Erhebungen 116 und den Wandabschnitten 106 Spalte bzw. Hohlräume 118 ausbilden, wobei in diesen Spalten bzw. Hohlräumen 118 ein geringer Fluidfluss im Betrieb möglich ist. Eine Anordnung der Ventilbolzen-Erhebungen 116 entlang des Umfangs des Ventilbolzens 110 bewirkt ferner, dass dieser im Wesentlichen zentriert wird innerhalb des Hohlraums 108 des Gehäuses 104.

Erfindungsgemäß kann dabei der Ventilbolzen 110 alternativ rotationssymmetrisch ausgebildet sein und die Gehäuse-Wandabschnitte 106 Erhebungen und/oder Ausnehmungen aufweisen. Darüber hinaus können erfindungsgemäß sowohl der Ventilbolzen 110 integral ausgebildete Erhebungen 116 und/oder einen nicht rotationssymmetrischen Querschnitt aufweisen als auch die Gehäuse-Wandabschnitte 106 ihrerseits Erhebungen und/oder Ausnehmungen. Der Ventilbolzen 110 kann analog zur Darstellung in Fig. 8a mehrere gleichmäßig entlang seines Umfangs beabstandete Erhebungen 116 aufweisen oder aber, wie in Fig. 8b gezeigt, einen gleichdickförmigen Querschnitt oder einen polygonalen oder elliptischen Querschnitt.

### Liste der verwendeten Bezugszeichen

- 2: Filtriervorrichtung
- 4: Gehäuse
- 6: Gehäuse-Wandabschnitte
- 8: Aufnahme-Hohlraum
- 10, 10': Siebträger
- 12: Siebträger-Längsachse
- 14: Filterelement
- 16: Siebträger-Erhebungen
- 18: Spalt/Hohlraum
- 20: Filterelementaufnahme
- 22: Gleichdickförmiger Querschnitt (dreikantig)
- h: Höhe der Erhebungen
- 102: Absperrventil
- 104: Gehäuse
- 106: Gehäuse-Wandabschnitte
- 108: Aufnahme-Hohlraum
- 110: Ventilbolzen
- 112: Ventilbolzen-Längsachse
- 116: Ventilbolzen-Erhebungen
- 118: Spalt/Hohlraum
- 120: Erster Ein-/Auslass
- 122: Zweiter Ein-/Auslass
- 124: Fließkanal
- 202: Verteilerventil
- 204: Gehäuse
- 206: Gehäuse-Wandabschnitte
- 208: Aufnahme-Hohlraum
- 210: Ventilbolzen
- 212: Ventilbolzen-Längsachse
- 216: Ventilbolzen-Erhebungen
- 218: Spalt/Hohlraum
- 220: Erster Ein-/Auslass
- 222: Zweiter Ein-/Auslass
- 224: Dritter Ein-/Auslass
- 226: Vierter Ein-/Auslass
- 228: Oberer Ein-/Auslass

## Patentansprüche

1. Filtriervorrichtung (2) zum Filtrieren eines Fluids, insbesondere einer Verunreinigung aufweisenden Kunststoff-Schmelze, mit
einem Gehäuse (4), welches mindestens einen Einlass zum Einleiten des Fluids und einen Auslass zum Abgeben des Fluids sowie einen in dem Gehäuse (4) durch Wandabschnitte (6) des Gehäuses (4) ausgebildeten Hohlraum (8) zum Aufnehmen eines Siebträgers (10, 10') aufweist,
einen beweglich in dem Hohlraum (6) des Gehäuses (4) angeordneten und eine Längsachse (12) aufweisenden Siebträger (10, 10') zum Aufnehmen mindestens eines Filterelements (14) zum Filtrieren des Fluids,
**dadurch gekennzeichnet, dass** der Siebträger (10, 10') außen mehrere integral ausgebildete Erhebungen (16) aufweist, wobei die Erhebungen (16) einstückig mit dem Siebträger (10, 10') und aus demselben Werkstoff ausgebildet sind, und/oder einen nicht rotationssymmetrischen Querschnitt (22) aufweist
und/oder an den Hohlraum (6) begrenzenden Wandabschnitten (6) des Gehäuses (4) Erhebungen und/oder Ausnehmungen ausgebildet sind,
derart, dass zwischen dem Wandabschnitt (6) und dem Siebträger (10, 10') mehrere Spalte/Hohlräume (18) ausgebildet sind, mittels derer ein geringer Fluidfluss im Betrieb ermöglicht ist.

2. Filtriervorrichtung (2) nach Anspruch 1,
**dadurch gekennzeichnet, dass** der Siebträger (10, 10') außen mindestens drei, vorzugsweise vier Erhebungen (16) aufweist und/oder an den Hohlraum (8) begrenzenden Wandabschnitten (6) des Gehäuses (4) Erhebungen und/oder Ausnehmungen ausgebildet sind, die so entlang des Umfangs des Siebträgers (10, 10') verteilt angeordnet sind, dass der Siebträger (10, 10') im Wesentlichen zentriert innerhalb des Hohlraumes (8) des Gehäuses (4) angeordnet ist,
derart, dass zwischen dem Wandabschnitt (6) und dem Siebträger (10, 10') mehrere Spalte/Hohlräume (18) ausgebildet sind, mittels derer ein geringer Fluidfluss im Betrieb ermöglicht ist.

3. Filtriervorrichtung (2) nach mindestens einem der vorstehenden Ansprüche,
**dadurch gekennzeichnet, dass** die Erhebungen (16) sich im Wesentlichen in Richtung der Längsachse (12) des Siebträgers (10, 10') und geradlinig erstrecken.

4. Filtriervorrichtung (2) nach mindestens einem der vorstehenden Ansprüche,
**dadurch gekennzeichnet, dass** die Erhebungen (16) gleichmäßig beanstandet in Richtung des Umfangs des Siebträgers (10, 10') angeordnet sind.

5. Filtriervorrichtung (2) nach mindestens einem der vorstehenden Ansprüche,
**dadurch gekennzeichnet, dass** die Erhebungen (16) gegenüber dem sonstigen Durchmesser des Siebträgers (10) eine Höhe (h) im Bereich von etwa 0,05 - 3 mm, vorzugsweise im Bereich von etwa 0,1 - 0,2 mm, aufweisen.

6. Filtriervorrichtung (2) nach mindestens einem der vorstehenden Ansprüche,
**dadurch gekennzeichnet, dass** die Erhebungen (16) aus einem verschleißarmen Material, insbesondere Metall oder Kunststoff ausgebildet sind.

7. Filtriervorrichtung (2) nach mindestens einem der vorstehenden Ansprüche,
**dadurch gekennzeichnet, dass** der Siebträger (10') senkrecht zur Siebträger-Längsachse (12) und/oder der den Hohlraum (8) begrenzende Wandabschnitt (6) des Gehäuses (4) einen gleichdickförmigen Querschnitt (22) aufweist, welcher die Erhebungen (16) des Siebträgers (10') und/oder die Erhebungen und/oder Ausnehmungen der Wandabschnitte (6) ausbildet.

8. Filtriervorrichtung (2) nach Anspruch 7,
**dadurch gekennzeichnet, dass** der gleichdickförmige Querschnitt (22) als dreikantiger oder vierkantiger Gleichdickquerschnitt (22) ausgebildet ist.

9. Filtriervorrichtung (2) nach mindestens einem der Ansprüche 7 oder 8,
**dadurch gekennzeichnet, dass** der gleichdickförmige Querschnitt (22) als Reuleaux-Dreieck ausgebildet ist.

10. Filtriervorrichtung (2) nach mindestens einem der vorstehenden Ansprüche,
**dadurch gekennzeichnet, dass** der Siebträger (10, 10') senkrecht zur Siebträger-Längsachse (12) und/oder der den Hohlraum (8) begrenzende Wandabschnitt (6) des Gehäuses (4) einen polygonalen Querschnitt aufweist, insbesondere aufweisend drei, vier, fünf oder mehr Ecken, wobei die Ecken vorzugsweise abgerundet ausgebildet sind.

11. Filtriervorrichtung (2) nach mindestens einem der vorstehenden Ansprüche,
**dadurch gekennzeichnet, dass** der Siebträger (10, 10') senkrecht zur Siebträger-Längsachse (12) und/oder der den Hohlraum (8) begrenzende Wandabschnitt (6) einen ellipsenförmigen Querschnitt aufweist.

12. Filtriervorrichtung (2) nach mindestens einem der vorstehenden Ansprüche,
**dadurch gekennzeichnet, dass** der Siebträger (10, 10') in dem Hohlraum (8) radial und/oder axial beweglich angeordnet ist.

13. Ventilanordnung (102, 202), insbesondere für eine Verunreinigung aufweisende Kunststoff-Schmelze, mit
einem Gehäuse (104, 204), welches mindestens einen Einlass zum Einleiten des Fluids und mindestens einem Auslass zum Abgeben des Fluids sowie einen in dem Gehäuse (104, 204) durch Wandabschnitte (106, 206) des Gehäuses (104, 204) ausgebildeten Hohlraum (108, 208) zum Aufnehmen eines Ventilbolzens (110, 210) aufweist,
einen beweglich in dem Hohlraum (108, 208) des Gehäuses (104, 204) angeordneten Ventilbolzen (110, 210) zum selektiven Freigeben, Verteilen und/oder Sperren des Fluidflusses durch das Gehäuse (104, 204),
wobei der Ventilbolzen (110, 210) außen mehrere integral ausgebildete Erhebungen (116, 216) und/oder einen nicht rotationssymmetrischen Querschnitt aufweist und/oder an den Hohlraum (108, 208) begrenzenden Wandabschnitten (106, 206) des Gehäuses (104, 204) Erhebungen und/oder Ausnehmungen ausgebildet sind, derart, dass zwischen dem Wandabschnitt (106, 206) und dem Ventilbolzen (110, 210) mehrere Spalte/Hohlräume (118, 218) ausgebildet sind, mittels derer ein geringer Fluidfluss im Betrieb ermöglicht ist,
**dadurch gekennzeichnet, dass** der Ventilbolzen senkrecht zur Ventilbolzen-Längsachse und/oder der Hohlraum begrenzende Wandabschnitt des Gehäuses einen gleichdickförmigen Querschnitt aufweist, welcher die Erhebungen des Ventilbolzens und/oder die Erhebungen und/oder Ausnehmungen der Wandabschnitte ausbildet.

## Claims

1. Filtering apparatus (2) for filtering a fluid, in particular a plastic melt having impurities, comprising
a housing (4), which has at least one inlet for introducing the fluid and an outlet for delivery of the fluid and a cavity (8) formed in the housing (4) by wall portions (6) of the housing (4) for receiving a sieve support (10, 10'),
a sieve support (10, 10') which is arranged movably in the cavity (6) of the housing (4) and has a longitudinal axis (12) for receiving at least one filter element (14) for filtering the fluid,
**characterized in that** the sieve support (10, 10') externally has a plurality of integrally formed raised portions (16), wherein the raised portions (16) are formed integrally with the sieve support (10, 10') and from the same material, and/or has a non-rotationally symmetrical cross-section (22),
and/or raised portions and/or recesses are formed on the wall portions (6) of the housing (4), that delimit the cavity (6),
in such a way that provided between the wall portion (6) and the sieve support (10, 10') are a plurality of gaps/cavities (18), by means of which a slight fluid flow is enabled in operation.

2. Filtering apparatus (2) according to claim 1,
**characterized in that** the sieve support (10, 10') externally has at least three, preferably four raised portions (16) and/or provided at wall portions (6) of the housing (4), that delimit the cavity (8) are raised portions and/or recesses which are arranged distributed along the periphery of the sieve support (10, 10') in such a way that the sieve support (10, 10') is arranged substantially centered within the cavity (8) of the housing (4),
in such a way that provided between the wall portion (6) and the sieve support (10, 10') are a plurality of gaps/cavities (18), by means of which a slight fluid flow is enabled in operation.

3. Filtering apparatus (2) according to at least one of the preceding claims,
**characterized in that** the raised portions (16) extend substantially in the direction of the longitudinal axis (12) of the sieve support (10, 10') and rectilinearly.

4. Filtering apparatus (2) according to at least one of the preceding claims,
**characterized in that** the raised portions (16) are arranged uniformly spaced in the direction of the periphery of the sieve support (10, 10').

5. Filtering apparatus (2) according to at least one of the preceding claims,
**characterized in that** the raised portions (16) are of a height (h) in the region of about 0.05 to 3 mm, preferably in the region of about 0.1 to 0.2 mm, in relation to the otherwise diameter of the sieve support (10).

6. Filtering device (2) according to at least one of the preceding claims,
**characterized in that** the raised portions (16) are formed from a low-wear material, in particular metal or plastic.

7. Filtering device (2) according to at least one of the preceding claims,
**characterized in that** the sieve support (10') perpendicular to the sieve support longitudinal axis (12) and/or the wall portion (6) of the housing (4), that delimits the cavity (8), is of a cross-section (22) of equal thickness, said cross-section providing the raised portions (16) of the sieve support (10) and/or the raised portions and/or recesses of the wall portions (6).

8. Filtering apparatus (2) according to claim 7,
**characterized in that** the equal-thickness cross-section (22) is in the form of a triangular or quadrangular equal thickness cross-section (22).

9. Filtering apparatus (2) according to at least one of claims 7 or 8,
**characterized in that** the equal-thickness cross-section (22) is in the form of a Reuleaux triangle.

10. Filtering apparatus (2) according to at least one of the preceding claims,
**characterized in that** the sieve support (10, 10') perpendicular to the sieve support longitudinal axis (12) and/or the wall portion (6) of the housing (4), that delimits the cavity (8), is of a polygonal cross-section, the cross-section in particular having three, four, five or more corners, wherein the corners are preferably rounded.

11. Filtering apparatus (2) according to at least one of the preceding claims,
**characterized in that** the sieve support (10, 10') perpendicular to the sieve support longitudinal axis (12) and/or the wall portion (6) of the housing (4), that delimits the cavity (8), is of an elliptical cross-section.

12. Filtering device (2) according to at least one of the preceding claims,
**characterized in that** the sieve support (10, 10') is arranged radially and/or axially movable in the cavity (8).

13. Valve arrangement (102, 202), in particular for a plastic melt having impurities, comprising
a housing (104, 204), which has at least one inlet for introduction of the fluid and at least one outlet for delivery of the fluid and a cavity (108, 208) formed in the housing (104, 204) by wall portions (106, 206) of the housing (104, 204) for receiving a valve bolt (110, 210),
a valve bolt (110, 210) which is arranged movably in the cavity (108, 208) of the housing (104, 204) for selectively enabling, distributing, and/or blocking the fluid flow through the housing (104, 204),
wherein the valve bolt (110, 210) externally has a plurality of integrally formed raised portions (116, 216) and/or a non-rotationally symmetrical cross-section and/or raised portions and/or recesses are formed at wall portions (106, 206) of the housing (104, 204), that delimit the cavity (108, 208), in such a way that provided between the wall portion (106, 206) and the valve bolt (110, 210) are a plurality of gaps/cavities (118, 218), by means of which a slight fluid flow is enabled in operation,
**characterized in that** the valve bolt perpendicular to the valve bolt longitudinal axis and/or the wall portion of the housing, that delimits the cavity, is of a cross-section of equal thickness, said cross-section providing the raised portions of the valve bolt and/or the raised portions and/or the recesses of the wall portions.

## Revendications

1. Dispositif de filtrage (2) pour filtrer un fluide, en particulier une matière fondue en plastique présentant des impuretés, avec
un boîtier (4), qui présente au moins une entrée pour introduire le fluide et une sortie pour évacuer le fluide, ainsi qu'une cavité (8) formée dans le boîtier (4) par des sections de paroi (6) du boîtier (4) pour recevoir un support de tamis (10, 10'),
un support de tamis (10, 10') disposé de manière mobile dans la cavité (6) du boîtier (4) et présentant un axe longitudinal (12) pour recevoir au moins un élément filtrant (14) pour filtrer le fluide,
**caractérisé en ce que** le support de tamis (10, 10') présente à l'extérieur plusieurs parties surélevées (16) formées intégralement, dans lequel lesdites parties surélevées (16) sont réalisées en une seule pièce avec le support de tamis (10, 10') et à partir du même matériau, et/ou présente une section transversale (22) non symétrique en rotation,
et/ou des parties surélevées et/ou des évidements sont réalisé(e)s sur des sections de paroi (6) du boîtier (4) délimitant la cavité (6),
de telle manière que plusieurs fentes/cavités (18) sont réalisées entre la section de paroi (6) et le support de tamis (10, 10'), au moyen desquelles un faible débit de fluide est possible en fonctionnement.

2. Dispositif de filtrage (2) selon la revendication 1,
**caractérisé en ce que** le support de tamis (10, 10') présente à l'extérieur au moins trois, de préférence quatre, parties surélevées (16) et/ou des parties surélevées et/ou des évidements sont réalisé(e)s sur des sections de paroi (6) du boîtier (4) délimitant la cavité (8), qui sont disposé(e)s de manière répartie le long de la périphérie du support de tamis (10, 10') de telle sorte que le support de tamis (10, 10') est disposé de manière sensiblement centrée à l'intérieur de la cavité (8) du boîtier (4),
de telle manière que plusieurs fentes/cavités (18) sont réalisées entre la section de paroi (6) et le support de tamis (10, 10'), au moyen desquelles un faible débit de fluide est possible en fonctionnement.

3. Dispositif de filtrage (2) selon au moins l'une quelconque des revendications précédentes,
**caractérisé en ce que** les parties surélevées (16) s'étendent sensiblement en direction de l'axe longitudinal (12) du support de tamis (10, 10') et de manière rectiligne.

4. Dispositif de filtrage (2) selon au moins l'une quelconque des revendications précédentes,
**caractérisé en ce que** les parties surélevées (16) sont disposées régulièrement en direction de la périphérie du support de tamis (10, 10').

5. Dispositif de filtrage (2) selon au moins l'une quelconque des revendications précédentes,
**caractérisé en ce que** les parties surélevées (16) présentent, par rapport à l'autre diamètre du support de tamis (10), une hauteur (h) dans la plage d'environ 0,05 - 3 mm, de préférence dans la plage d'environ 0,1 - 0,2 mm.

6. Dispositif de filtrage (2) selon au moins l'une quelconque des revendications précédentes,
**caractérisé en ce que** les parties surélevées (16) sont réalisées à partir d'un matériau à faible usure, en particulier en métal ou en plastique.

7. Dispositif de filtrage (2) selon au moins l'une quelconque des revendications précédentes,
**caractérisé en ce que** le support de tamis (10') est disposé perpendiculairement à l'axe longitudinal de support de tamis (12) et/ou que la section de paroi (6) délimitant la cavité (8) du boîtier (4) présente une section transversale (22) à épaisseur constante, laquelle réalise ainsi les parties surélevées (16) du support de tamis (10') et/ou les parties surélevées et/ou les évidements des sections de paroi (6).

8. Dispositif de filtrage (2) selon la revendication 7,
**caractérisé en ce que** la section transversale (22) à épaisseur constante est réalisée en tant que section transversale (22) triangulaire ou carrée à épaisseur constante.

9. Dispositif de filtrage (2) selon au moins l'une quelconque des revendications 7 ou 8,
**caractérisé en ce que** la section transversale (22) à épaisseur constante est réalisée en triangle de Reuleaux.

10. Dispositif de filtrage (2) selon au moins l'une quelconque des revendications précédentes,
**caractérisé en ce que** le support de tamis (10, 10'), perpendiculairement à l'axe longitudinal de support de tamis (12), et/ou la section de paroi (6) délimitant la cavité (8) du boîtier (4) présente(nt) une section polygonale, présentant en particulier trois, quatre, cinq coins ou plus coins, dans lequel les coins sont réalisés de préférence de manière arrondie.

11. Dispositif de filtrage (2) selon au moins l'une quelconque des revendications précédentes,
**caractérisé en ce que** le support de tamis (10, 10'), perpendiculairement à l'axe longitudinal de support de tamis (12), et/ou la section de paroi (6) délimitant la cavité (8) présente(nt) une section transversale en forme d'ellipse.

12. Dispositif de filtrage (2) selon au moins l'une quelconque des revendications précédentes,
**caractérisé en ce que** le support de tamis (10, 10') est disposé de manière mobile radialement et/ou axialement dans la cavité (8).

13. Ensemble de vanne (102, 202), en particulier pour une matière fondue en plastique présentant des impuretés, avec
un boîtier (104, 204), qui présente au moins une entrée pour introduire le fluide et au moins une sortie pour évacuer le fluide, ainsi qu'une cavité (108, 208) réalisée dans le boîtier (104, 204) par des sections de paroi (106, 206) du boîtier (104, 204) pour recevoir un boulon de vanne (110, 210),
un boulon de vanne (110, 210) disposé de manière mobile dans la cavité (108, 208) du boîtier (104, 204) pour libérer, répartir et/ou bloquer sélectivement le flux de fluide à travers le boîtier (104, 204),
dans lequel le boulon de vanne (110, 210) présente à l'extérieur plusieurs parties surélevées (116, 216) réalisées de manière intégrale et/ou une section transversale non symétrique en rotation et/ou des parties surélevées et/ou des évidements sont réalisés sur des sections de paroi (106, 206) délimitant la cavité (108, 208) du boîtier (104, 204), de telle manière que, entre la section de paroi (106, 206) et le boulon de soupape (110, 210), sont réalisées plusieurs fentes/cavités (118, 218) permettant un faible flux de fluide en fonctionnement,
**caractérisé en ce que** le boulon de soupape, perpendiculairement à l'axe longitudinal du boulon de soupape, et/ou la section de paroi délimitant la cavité du boîtier présente(nt) une section transversale à épaisseur constante, laquelle réalise les parties surélevées du boulon de soupape et/ou les parties surélevées et/ou les évidements des sections de paroi.
